# EUROPÄISCHE PATENTSCHRIFT

(11) **EP 1 201 936 B1**
(45) Veröffentlichungstag und Bekanntmachung des Hinweises auf die Patenterteilung: **28.09.2005**
(21) Anmeldenummer: 01810995.9
(22) Anmeldetag: 12.10.2001
(51) Int. Cl.: F16B 7/18, F16B 5/07

(54) **Montagewinkel für Schienen**
Mounting bracket for rails
Support de montage pour rails

(30) Priorität: 23.10.2000 DE 10052577
(43) Veröffentlichungstag der Anmeldung: 02.05.2002
(73) Patentinhaber: HILTI Aktiengesellschaft, 9494 Schaan (LI)
(72) Erfinder: Hoffmann, Armin, 86899 Landsberg (DE)
(74) Vertreter: Wildi, Roland

(56) Entgegenhaltungen:
- DE-A- 2 504 721
- US-A- 4 656 801

## Beschreibung

Die Erfindung betrifft eine Verbindungsvorrichtung für Monatgeschienen mit einem Verbindungselement, zum Anbinden der Montageschienen.

Verbindungsvorrichtungen der oben genannten Art finden insbesondere bei Rohrabhänge-Systemen Anwendung. Um beispielsweise ein Rohr in einer gewünschten Position von einer Decke abzuhängen, müssen die Montageschienen flexibel miteinander verbindbar sein. Bekannte Lösungen verwenden hierzu beispielsweise Schienenmuttern mit Winkelelementen. Das Winkelelement weist hierzu mehrere Befestigungslöcher zum Anbinden an die gewünschte Position an einer Montageschiene auf.

Nachteilig an dieser bekannten Lösung ist, dass beispielsweise für verschiedene Anbindungspositionen zweier Montageschienen miteinander oder mehrer Montageschienen an einem Befestigungspunkt verschieden ausgebildete Winkelelemente angewendet werden müssen. Dementsprechend gross ist die Anzahl der verschiedenartigen Winkelelemente. Für einen Anwender bedeutet dies einerseits einen grossen Aufwand in der Lagerhaltung, da eine Vielzahl verschiedenartiger Winkelelemente an Lager vorrätig sein müssen und andererseits ein geringer Grad an flexibilität an Ort, falls beispielsweise ein Winkel oder ein Knoten im Abhänge-System anders als geplant ausfällt.

Die DE 25 04 721 A1 zeigt eine Verbindungsvorrichtung für C-förmige Profilschienen mit einem Verbindungselement zum Anbinden der Profilschienen. Die Profilschienen weisen an den dem inneren der erstellbaren Rahmenkonstruktion zugewandten Flächen Lochraster und an deren Rückseite eine gesonderte Lochreihe auf. Das Verbindungselement ist als Eckverbindungsstück ausgebildet und weist eine Fläche mit vier im Rasterabstand angeordneten Zapfen und eine Bohrung zur Anordnung des Verbindungselementes an der Profilschiene auf. Das Verbindungselement ist entlang dem Raster an der Profilschiene mittels einer Schraube festlegbar.

Die US 4,656,801 A zeigt eine Verbindungsvorrichtung für U-förmige Schienen mit einem Verbindungselement zum Anbinden der Schienen. Das Verbindungselement ist als Eckelement ausgebildet und weist Vorsprünge sowie eine Bohrung für eine hindurchzuführende Schraube auf. Das Verbindungselement wird an einem Ende einer Schiene mittels Punktschweissen angeordnet. Die zu verbindende Schiene weist einen speziell ausgebildeten Endbereich auf, der mit der anderen Schiene und dem daran angeordneten Verbindungselement zusammenführbar ist. Gegebenenfalls weist die Verbindungsvorrichtung eine zusätzliche, an einer der zu verbindenden Schiene angeschweisste Klemmplatte auf.

Der vorliegenden Erfindung liegt die Aufgabe zugrunde, eine Verbindungsvorrichtung für Montageschienen zu schaffen, die für eine Vielzahl von Anwendungen geeignet ist und wirtschaftlich herstellbar ist.

Erfindungsgemäss wird die Aufgabe dadurch gelöst, dass das Verbindungselement ein Basisteil und zumindest ein Anbindeteil mit zumindest einem Befestigungsloch aufweist, wobei das Anbindeteil durch eine Rastverbindung lösbar mit dem Basisteil verbindbar ist.

Dadurch, dass das Verbindungsteil modular aufgebaut ist, lassen sich mit wenigen Teilen eine Vielzahl an Verbindungen umsetzen. Das Basisteil weist die Basisfunktion auf und ermöglicht ein oder mehrere Anbindeteile durch eine Rastverbindung an denselben zu verbinden. Die Rastverbindung ist lösbar gestaltet um beispielsweise eine nachträgliche Korrektur der Position des Anbindeteils gegenüber dem Basisteil zu ermöglichen. Ausserdem ist die Verwendung einer Rastverbindung vorteilhaft, da sich die Handhabung der Verbindungsvorrichtung für einen Anwender erheblich vereinfacht, da bestimmte Positionen der Teile untereinander damit vorgegeben sind. Ferner unterbindet die Rastverbindung ein Verdrehen der Teile gegeneinander in der befestigten Position. Für die Herstellung der Verbindungsvorrichtung bedeutet die Reduktion der Anzahl Teile auf zwei anstelle vieler verschiedener Winkelelemente eine wirtschaftlichere Herstellung gegenüber dem Stand der Technik. Ausserdem vereinfacht sich die Lagerhaltung, da anstelle einer Vielzahl von Elementen nur zwei Elemente vorliegen. Selbst die Planung für den Anwender gestaltet sich gegenüber dem bekannten Stand der Technik einfacher und flexibler.

Die Rastverbindung weist vorzugsweise mehrere Ausnehmungen in einem Teil auf, die in Eingriff mit Zapfen im anderen Teil bringbar sind und Basisteil und Anbindeteil mittels einer Schraubverbindung miteinander verspannbar sind, um eine wirtschaftliche Herstellung der Verbindungsvorrichtung sicherzustellen. Die Ausbildung von Ausnehmungen und Zapfen oder Ausprägungen ist herstellungstechnisch einfach und wirtschaftlich. Die Zahl der Ausnehmungen legt den Raster der Rastverbindung fest. Je höher die Zahl der Ausnehmungen desto mehr Positionen sind für den Anwender mittels der Rastverbindung verwendbar. Jedoch steigt mit der Zahl der Positionen die Schwierigkeit, in kurzer Zeit die gewünschte Stellung auszuwählen.

In einer bevorzugten Ausführungsform weist das Basisteil zumindest vier symmetrische, um eine Durchgangsbohrung für die Schraubverbindung angeordnete, Ausnehmungen auf, die in Eingriff mit vier symmetrisch um eine Durchgangsbohrung für die Schraubverbindung angeordnete Zapfen bringbar sind. Somit ist das Anbindeteil gegenüber dem Basisteil beispielsweise bei vier Ausnehmungen jeweils um 90° drehbar. Durch die mittige Anordnung der Durchgangsbohrung für die Schraubverbindung ist ein gleichmässiger Eingriff zwischen Zapfen und Ausnehmungen sichergestellt und ausserdem eine allenfalls angreifende Last gleichmässig auf die Rastverbindung verteilt. Die Durchgangsbohrungen sind vorzugsweise quer zur Längsrichtung mittig auf dem Basisteil und dem Anbindeteil angeordnet, um möglichst viele Verbindungsmöglichkeiten zwischen Anbindeteil und Basisteil zu schaffen.

Vorteilhafterweise weist das Basisteil zwei Verbindungswände und einen Verbindungsboden auf, die im wesentlichen U-förmig angeordnet sind. Damit ist das Basisteil einfach herzustellen und verdrehsicher an die Montageschiene anbindbar.

Das Basisteil weist vorzugsweise an einer Stirnseite zumindest einen Steg und an der gegenüberliegenden Stirnseite eine dazu komplementär ausgebildete Tasche auf, um mehrere Basisteile hintereinander an eine Montageschienen anbinden zu können, wobei der Steg eines ersten Basisteils in die Tasche eines zweiten, benachbarten, Basisteils bringbar ist und somit mit diesem formschlüssig verbunden ist.

Vorteilhafterweise weist die Durchgangsbohrung des Basisteils ein Innengewinde auf. Das Innengewinde ist ein Bestandteil der Schraubverbindung. Selbstverständlich ist die Anordnung des Innengewindes an der Durchgangsbohrung am Anbindeteil möglich, ist jedoch wirtschaftlich gesehen weniger sinnvoll, da höchstens so viele Basisteile zur Anwendung gelangen wie Anbindeteile.

In einer weiteren bevorzugten Ausführungsform weist das Anbindeteil eine Anbindeplatte und eine senkrecht dazu abgewinkelte Befestigungsplatte auf, wobei die Anbindeplatte zumindest ein Befestigungsloch aufweist und die Befestigungsplatte mit den Zapfen der Rastverbindung versehen ist. Vorzugsweise ist die Befestigungsplatte quadratisch ausgebildet und die Durchgangsbohrung mittig auf der Befestigungsplatte angeordnet, wobei Seitenlänge der Befestigungsplatte etwa der Höhe der Montageschiene entspricht. Damit kann das Anbindeteil in einem 90°-Raster beliebig gedreht werden, ohne sich über die Montageschiene zu erstrecken. Selbstverständlich kann der Winkel zwischen der Anbindeplatte und der Befestigungsplatte je nach Anforderung an die Verbindungsvorrichtung beliebig gewählt werden. Ferner könnte sich für gewisse Anwendungen eine rund ausgebildete Befestigungsplatte als vorteilhaft erweisen.

Vorteilhafterweise sind die Verbindungswände rechteckig ausgebildet, wobei die Breite der Verbindungswände des Basisteils dem 2,0-fachen der Höhe der Montageschienen und dem 2.0-fachen des Abstandes der beiden Verbindungswände entspricht. Dadurch ist eine Kopplung durch die Verbindungsvorrichtung zweier Montageschienen möglich, wobei die beiden Öffnungen der Montageschienen voneinander abgewandt oder zugewandt sein können.

Vorzugsweise ist die Verbindungsvorrichtung, insbesondere das Verbindungselement als Blech-Stanz-Biegeteil ausgebildet um eine wirtschaftliche Herstellung sicherzustellen.

Die Erfindung wird nachstehend anhand eines Ausführungsbeispieles näher erläutert. Es zeigen:
- Fig. 1: eine perspektivische Darstellung einer erfindungsgemässen Verbindungsvorrichtung mit einem Verbindungselement;
- Fig. 2: eine vergrösserte perspektivische Darstellung eines Basiselementes des Verbindungselementes der Fig. 1;
- Fig. 3: eine vergrösserte perspektivische Darstellung eines Anbindeelementes des Verbindungselementes der Fig. 1;
- Fig. 4: eine vergrösserte perspektivische Darstellung des Verbindungselementes der Fig. 1;
- Fig. 5: das Verbindungselement der Fig. 4, mit einem um 90° verdrehten Anbindeteil;
- Fig. 6: eine Anwendungsmöglichkeit der in Fig. 1 dargestellten Verbindungsvorrichtung;
- Fig. 7: eine Montageschiene mit mehreren Basisteilen;
- Fig. 8: die Verbindungsvorrichtung mit einer durchgehenden Montageschiene;
- Fig. 9: eine Anbindemöglichkeit einer Montageschiene an ein Ende einer Montageschiene;
- Fig. 10: eine perspektivische Darstellung einer weiteren Ausführungsform einer erfindungsgemässen Verbindungsvorrichtung mit einem Verbindungselement;
- Fig. 11: die in Fig. 10 dargestellte Ausführung mit einer um 90° verdrehten Montageschiene;

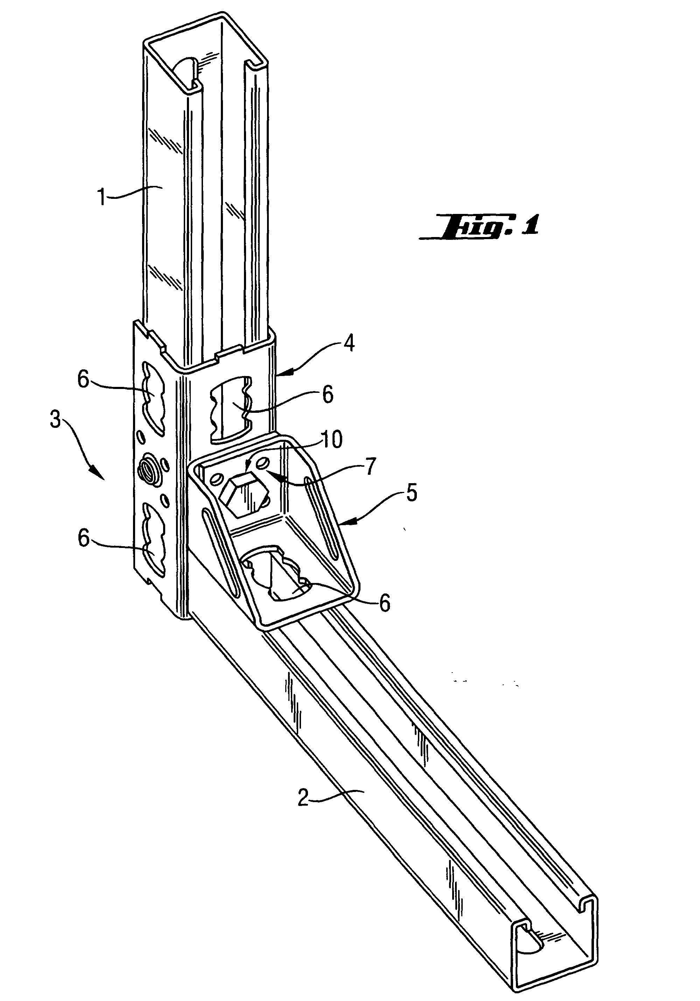

In den Fig. 1 bis 6 ist die erfindungsgemässe Verbindungsvorrichtung für Montageschienen 1, 2 mit einem, insgesamt mit 3 bezeichneten Verbindungselement, zum Anbinden der Montageschienen 1, 2 dargestellt.

Das Verbindungselement 3 weist ein Basisteil 4 und zumindest ein Anbindeteil 5 auf. Beide Teile weisen jeweils zumindest ein Befestigungsloch 6 auf, das zum Anbinden des jeweiligen Teils an die korrespondierende Montageschiene 1, 2 dient. Das Anbindeteil 5 ist durch eine, insgesamt mit 7 bezeichnete, Rastverbindung lösbar mit dem Basisteil 4 verbindbar, wie dies insbesondere Fig. 1 zeigt.

Die Rastverbindung 7 weist mehrere Ausnehmungen 8 in einem Teil auf, die in Eingriff mit Zapfen 9 im anderen Teil bringbar sind. Ferner weist die Rastverbindung 7 eine Schraubverbindung 10 auf, mittels der das Basisteil 4 und das Anbindeteil 5 miteinander verspannbar sind.

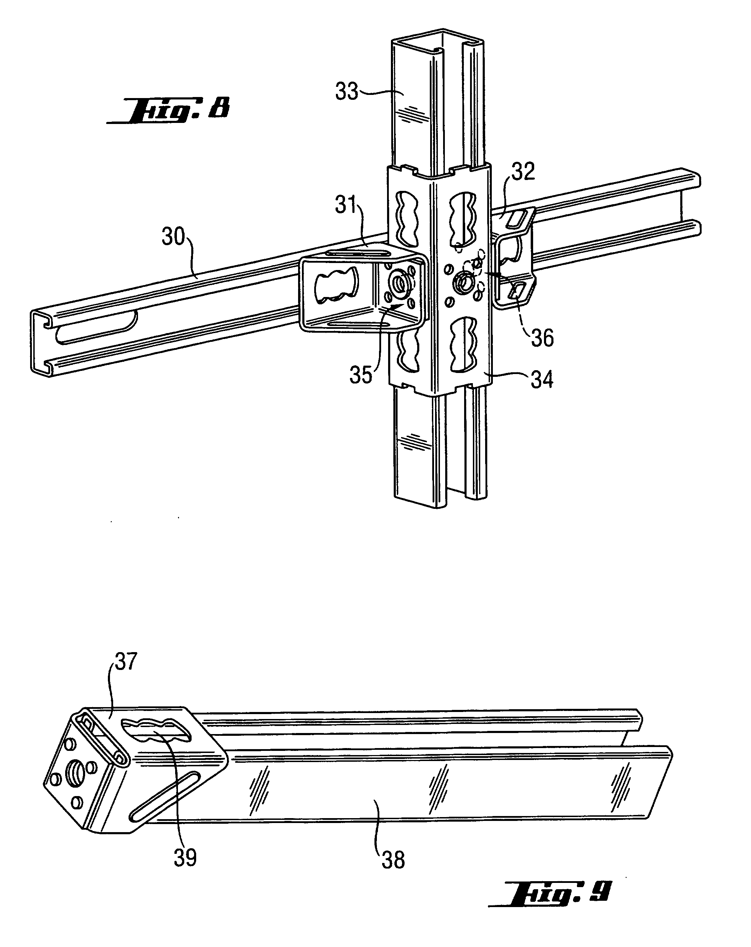

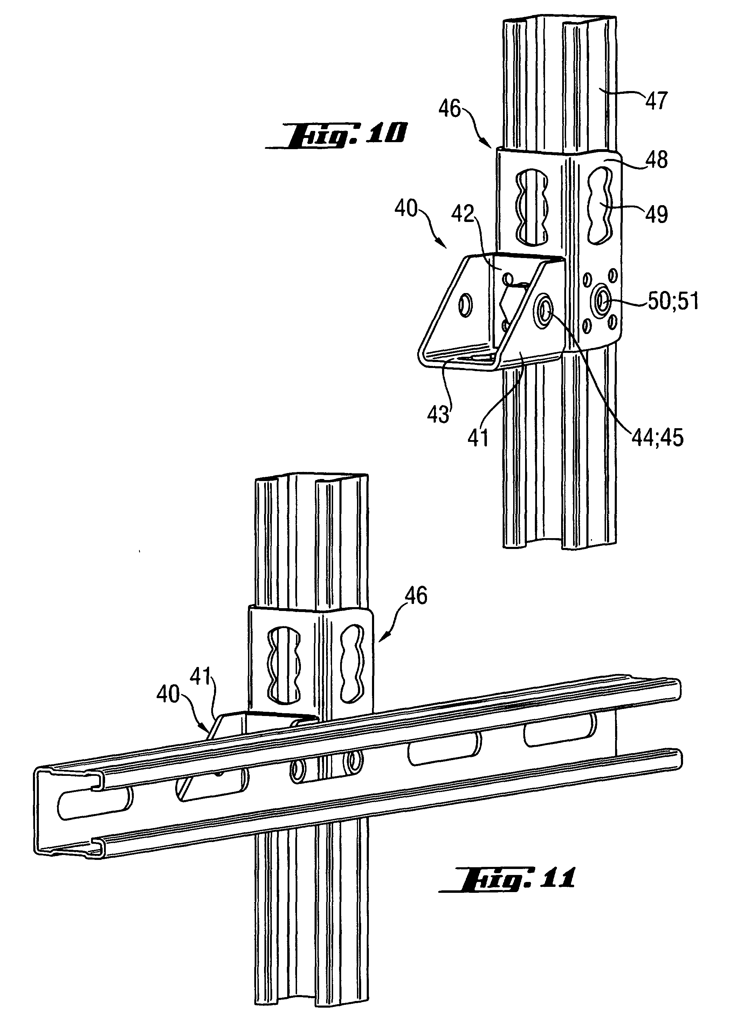

In dieser Ausführungsform weist das Basisteil 4 vier symmetrisch, um eine Durchgangsbohrung 11 für die Schraubverbindung, angeordnete Ausnehmungen 8 auf, die in Eingriff mit vier symmetrisch um eine Durchgangsbohrung 12 für die Schraubverbindung angeordnete Zapfen 9 bringbar sind, wie dies insbesondere aus Fig. 4 und 5 ersichtlich ist. Das Basisteil 4 weist zwei parallel verlaufende Verbindungswände 13 und einen Verbindungsboden 14 auf, die U-förmig zueinander angeordnet sind. Die Verbindungswände 13 und der Verbindungsboden 14 weisen jeweils auf einer freien Stirnseite jeweils einen Steg 15 und an der gegenüberliegenden Stirnseite eine dazu komplementär ausgebildete Tasche 16 auf. Dadurch greifen aneinandergereihte Basisteile 4, 20 formschlüssig ineinander, wie dies insbesondere Fig. 6 zeigt. Ferner weisen die beiden Verbindungswände 13 und der Verbindungsboden 14 jeweils eine Rastverbindungsmöglichkeit und ein Befestigungsloch 6 zum Anbinden des Basisteils 4 an die Schiene 1 auf.

Die Schraubverbindung 10 weist eine Mehrkantkopf-Schraube 17 auf, wobei die Mehrkantkopf-Schraube 17 durch ein in der Durchgangsbohrung des Basisteils 4 angeordnetes Innengewinde 19 formschlüssig mit dem Basisteil 4 verbunden ist.

Das Anbindeteil 5 weist eine Anbindeplatte 21 und eine senkrecht dazu abgewinkelte Befestigungsplatte 22 auf, wobei die Anbindeplatte 21 ein Befestigungsloch 6 aufweist. Die Befestigungsplatte 22 ist mit den Zapfen 9 der Rastverbindung 7 versehen.

Wie insbesondere aus Fig. 4 und 5 hervorgeht, können das Basisteil 4 und das Anbindeteil 5 im nicht verbundenen Zustand verdreht werden. In dieser Ausführung weist die Rastverbindung 7 vier, jeweils 90° gegeneinander verdrehte Rastpositionen auf, in der die Rastverbindung 7 einrastet. Selbstverständlich kann das Anbindeteil 5 anstelle, wie dies in Fig.4 und 5 dargestellt ist, mit dem Verbindungsboden 14 auch mit den Verbindungswänden 15 verbunden sein. Ferner können an das Basisteil 4 mehrere Anbindeteile 5 angebunden werden.

In der Fig. 6 ist eine weitere Verbindungsmöglichkeit mit der erfindungsgemässen Verbindungsvorrichtung dargestellt. Die beiden Montageschienen 1, 2 weisen je eine Montageöffnung 24 auf und sind derart zueinander angeordnet, dass die Montageöffnungen voneinander abgewandt sind. Zwei Basisteile 4, 20 sind mittels der korrespondierenden Stege 15 und Taschen 16 formschlüssig miteinander gekoppelt. Ferner ist am Verbindungsboden 14 der Basisteil 4, 20 jeweils ein Anbindeteil 5, 25 mittels einer Rastverbindung 7 drehfest befestigt. Die Anbindeteile sind mit den jeweiligen Montageschienen 1, 2 durch beispielsweise eine nicht dargestellte Schienenmutter verbunden. Zwei Montageschienen-Boden 26, 27 stehen miteinander in Kontakt. Um dies zu gewährleisten, entspricht die Breite (t) der Verbindungswände des Basisteils dem 2,0-fachen der Höhe (h) der Montageschienen 1, 2 und dem 2,0-fachen des Abstandes (a) der beiden Verbindungswände 13 eines Basisteils 4, 20.

In der Fig. 7 ist die Montageschiene 1 mit mehreren Basisteilen 4, 20, 28, in verschienenen Positionen zur Montageschiene 1 dargestellt. Ferner ist eine Schienenmutter 29 in einer Einführposition dargestellt.

Um die erfindungsgemässe Verbindungsvorrichtung für eine durchgehende Montageschiene 30 zu verwenden, werden zwei Anbindeteile 31, 32 an die Montageschiene durch nicht dargestellte Schienenmuttern angebunden, wie dies aus Fig. 8 ersichtlich ist. Eine an einer zweiten, senkrecht zur durchgehenden Montageschiene 30 verlaufende, Montageschiene 33 von einem Basisteil 34 umfasst. Die Anbindeteile 31, 32 sind jeweils durch eine Rastverbindung 35, 36 lösbar am Basisteil befestigt.

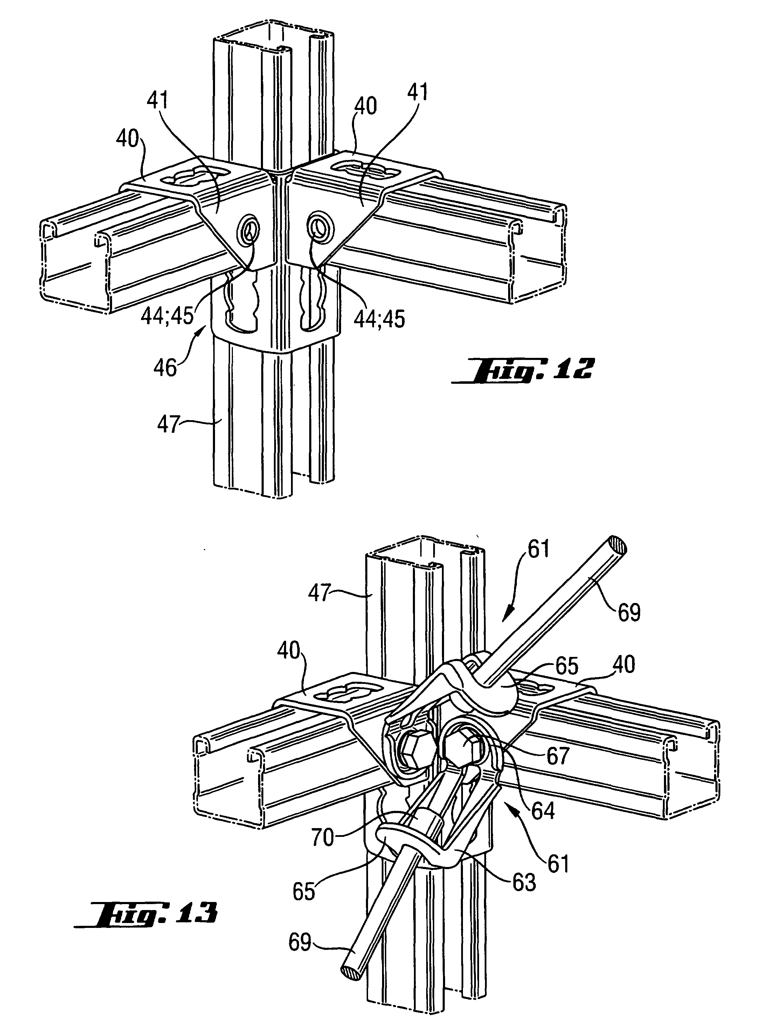

In Fig. 9 ist eine weitere Anbindungsmöglichkeit eines Anbindteils 37 an einem Ende einer Montageschiene 38 dargestellt. Dabei umgreift das Anbindeteil 37 an einem Endbereich die Montageschiene 38. Mittels einer nicht dargestellten Schienenmutter wird das Anbindeteil 37 durch eine Befestigungsloch 39 an der Montageschiene 38 befestigt.

Die in den Fig. 1 bis 9 dargestellten Teile sind beispielsweise als Blech-Stanz Biegeteil ausgebildet.

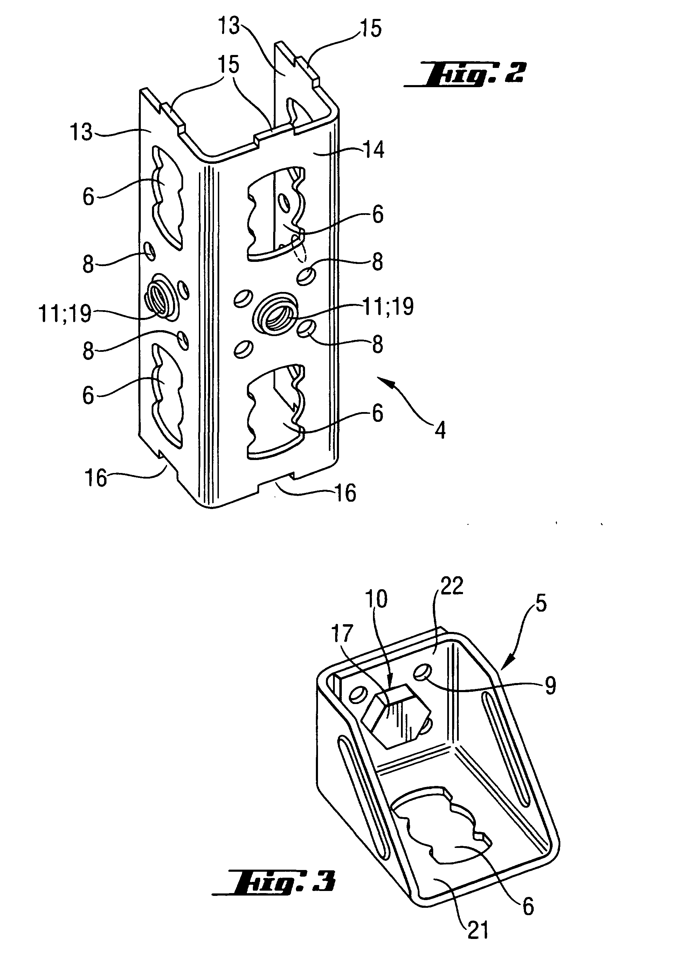

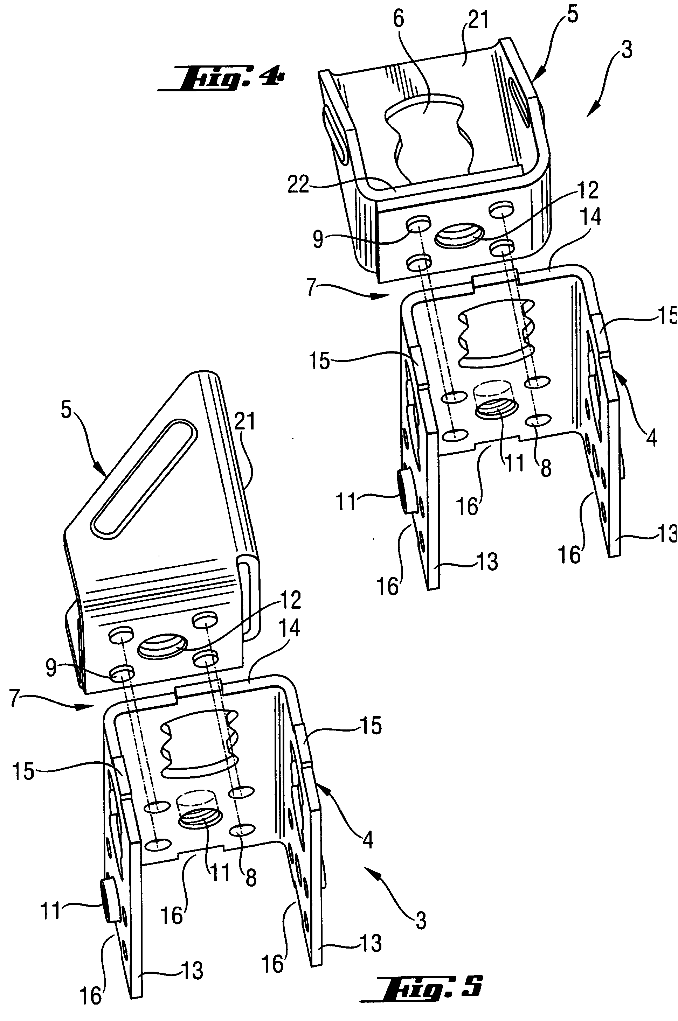

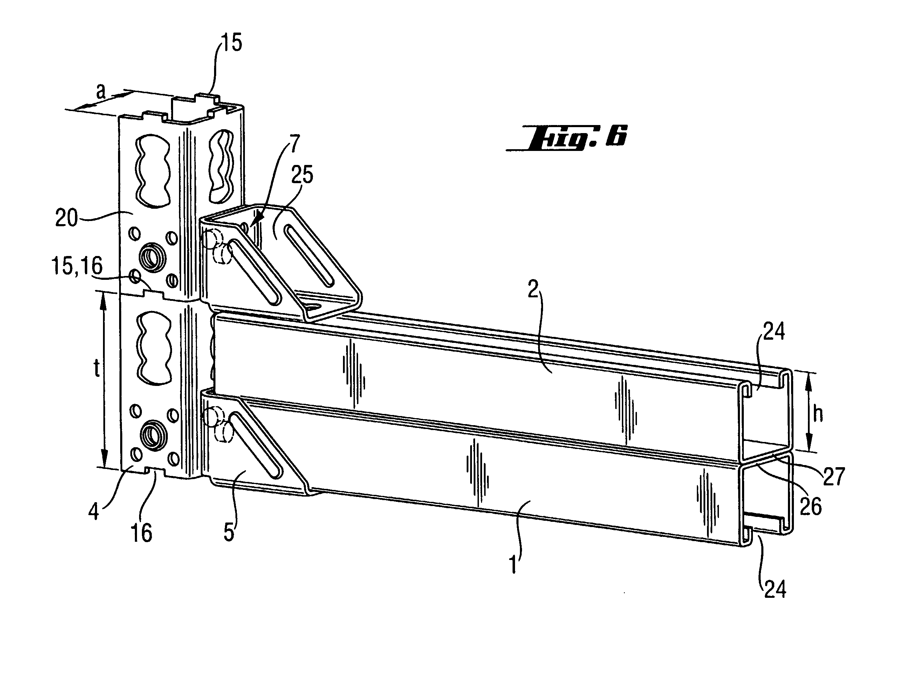

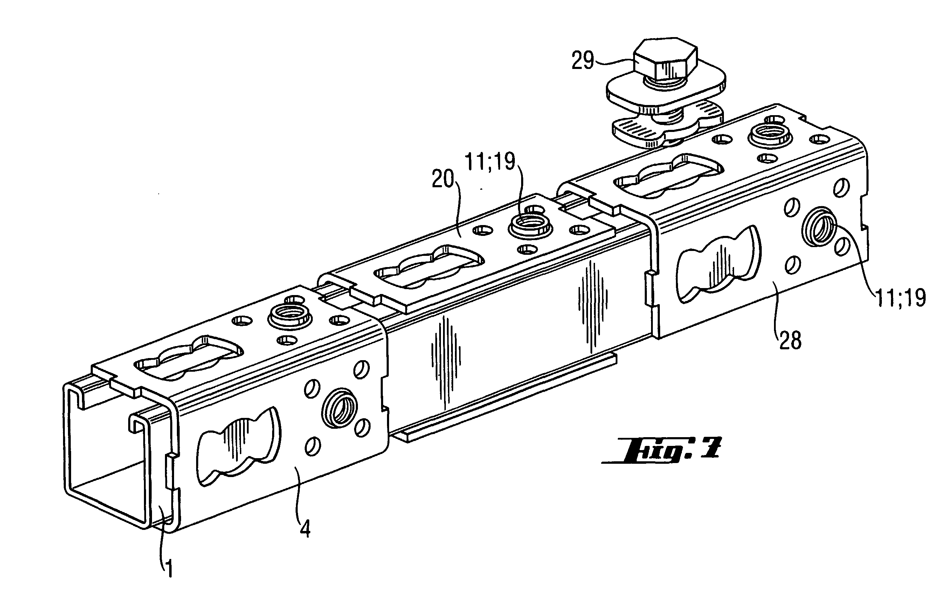

In den Fig. 10 bis 13 ist eine weitere Ausführungsform eines Anbindeteils 40 und dessen Anwendung dargestellt. Im Gegensatz zu dem in Fig. 3 dargestellten Anbindeteil 5 weist das in den Fig. 10 bis 13 dargestellte Anbindeteil 40 an zumindest einem Verbindungssteg 41, der eine Befestigungsplatte 42 mit einer rechtwinklig davon abgebogenen Anbindeplatte 43 verbindet, eine zusätzliche, ein Innengewinde 45 aufweisende, Durchgangsbohrung 44 auf. Das Anbindeteil 40 ist durch ein Basisteil 46 auf einer Montageschiene 47 festlegbar. Das insgesamt mit 46 bezeichnete Basisteil 46 weist eine Verbindungswand 48, mit einem Verbindungsloch 49 und einer, mit einem Innengewinde 50 aufweisenden, Durchgangsbohrung 51 auf. Um eine gegenüber der Montageschiene 47 um 90° verdrehte zweite Montageschiene 52 an der Montageschiene 47 optimal festlegen zu können, liegt die Verbindungswand 48 in der gleichen Ebene wie der Verbindungssteg 41. Ferner weist zumindest die zweite Montageschiene 52 eine, mit mehreren in deren Längsrichtung gleichmässig angeordnete Langlöcher 53 versehene, Bodenplatte 54 auf, die zur Aufnahme der beiden Durchgangsbohrungen 44 und 51 dient, wie dies insbesondere in Fig. 11 dargestellt ist. Aus Gründen der Übersichtlichkeit wurden die der Befestigung dienenden Schrauben nicht dargestellt.

Die Fig. 12 und 13 zeigen eine weitere Anwendung des Anbindeteils 40 als Befestigungspunkt 60 für, insgesamt mit 61 bezeichnete, Querverstrebungen. Die Querverstrebung 61 weist ein Grundplattenteil 63 mit zwei jeweils an den Längsenden desselben angeordneten Befestigungslaschen 64, 65 auf. Die am Anbindeteil 40 befestigte Befestigungslasche 64 weist eine Aufnahmebohrung 66 für eine Schraube 67 auf und die gegenüberliegende Befestigungslasche 65 eine Führungsbohrung 68 zur formschlüssigen Aufnahme eines Endes eines Verstrebungsstabes 69. Der Verstrebungsstab 69 weist an diesem Ende einen, den Aussendurchmesser des übrigen Verstrebungsstabs 69 zumindest teilweise überragenden, Hintergriffzapfen 70 auf, der die Führungsbohrung 68 formschlüssig hintergreift. Zum Einführen des Hintergriffzapfens 70 in die Führungsbohrung 68 weist das Grundplattenteil 63 eine Einführlochung 71 auf, die mit der Führungsbohrung 68 durchgängig verbunden ist. Eine derartig ausgebildete Querverstrebung 61 dient zur Aufnahme von Zugbelastungen innerhalb eines beispielsweise durch mehrere Montageschienen 47, 52 gebildeten Installationssystems.

## Patentansprüche

1. Verbindungsvorrichtung für Montageschienen (1, 2, 30, 33,38), mit einem Verbindungselement (3), zum Anbinden der Montageschienen (1, 2, 30, 33,38), **dadurch gekennzeichnet, dass** das Verbindungselement (3) ein Basisteil (4,20,28,34) und zumindest ein Anbindeteil (5, 25, 31, 32, 37) mit zumindest einem Befestigungsloch (6, 39) aufweist, wobei das Anbindeteil (5, 25, 31, 32, 37) durch eine Rastverbindung (7, 35, 36) lösbar mit dem Basisteil (4,20,28,34) verbindbar ist.

2. Verbindungsvorrichtung nach Anspruch 1, **dadurch gekennzeichnet, dass** die Rastverbindung (7, 35, 36) mehrere Ausnehmungen (8) in einem Teil aufweist, die in Eingriff mit Zapfen (9) im anderen Teil bringbar sind und Basisteil (4,20,28,34) und Anbindeteil (5, 25, 31, 32, 37) mittels einer Schraubverbindung (10) miteinander verspannbar sind.

3. Verbindungsvorrichtung nach Anspruch 2, **dadurch gekennzeichnet, dass** das Basisteil (5, 31, 32, 37) zumindest vier symmetrisch, um eine Durchgangsbohrung (11) für die Schraubverbindung (10) angeordnete Ausnehmungen (8) aufweist, die in Eingriff mit vier symmetrisch um eine Durchgangsbohrung (12) für die Schraubverbindung (10) angeordnete Zapfen (9) bringbar sind.

4. Verbindungsvorrichtung nach einem der Ansprüche 1 bis 3, **dadurch gekennzeichnet, dass** das Basisteil (4, 20, 28, 34) zwei Verbindungswände (13) und einen Verbindungsboden (14) aufweist, die im wesentlichen U-förmig angeordnet sind.

5. Verbindungsvorrichtung nach einem der Ansprüche 1 bis 4, **dadurch gekennzeichnet, dass** das Basissteil (4, 20, 28, 34) an einer Stirnseite zumindest einen Steg (15) und an der gegenüberliegenden Stirnseite eine dazu komplementär ausgebildete Tasche (16) aufweist.

6. Verbindungsvorrichtung nach einem der Ansprüche 3 bis 5, **dadurch gekennzeichnet, dass** die Durchgangsbohrung (11) des Basisteils (4, 20, 28, 34) ein Innengewinde (19) aufweist.

7. Verbindungsvorrichtung nach einem der Ansprüche 2 bis 6, **dadurch gekennzeichnet, dass** das Anbindeteil (5, 25, 31, 32, 37) eine Anbindeplatte (21) und eine senkrecht dazu abgewinkelte Befestigungsplatte (22) aufweist, wobei die Anbindeplatte (21) zumindest ein Befestigungsloch (6) aufweist und die Befestigungsplatte (22) mit den Zapfen (9) der Rastverbindung (7, 35, 36) versehen ist.

8. Verbindungsvorrichtung nach Anspruch 4, **dadurch gekennzeichnet, dass** die Verbindungswände (13) rechteckförmig ausgebildet sind, wobei die Breite (t) der Verbindungswände (13) des Basisteils (4, 20, 28, 34) dem 2,0-fachen der Höhe (h) der Montageschienen (1, 2, 30, 33,38) und dem 2,0-fachen des Abstandes (a) der beiden Verbindungswände (13) entspricht.

## Claims

1. Connecting device for assembly rails (1, 2, 30, 33, 38) comprising a connecting element (3) for linking the assembly rails (1, 2, 30, 33, 38), **characterised in that** the connecting element (3) comprises a base element (4, 20, 28, 34) and at least one linking element (5, 25, 31, 32, 37) with at least one fixing hole (6, 39), and the linking element (5, 25, 31, 32, 37) is releasably connectable to the base element (4, 20, 28, 34) by means of a detent connection (7, 35, 36).

2. Connecting device according to Claim 1, **characterised in that** the detent connection (7, 35, 36) comprises a plurality of cutouts (8) in a section which can be engaged with pin (9) in the other section, and base element (4, 20, 28, 34) and linking element (5, 25, 31, 32, 37) can be clamped together by means of a screw connection (10).

3. Connecting device according to Claim 2, **characterised in that** the base element (5, 31, 32, 37) comprises at least four cutouts (8) arranged symmetrically around a throughbore (11) for the screw connection (10) which are connectable with four pins (9) which are arranged symmetrically around a throughbore (12) for the screw connection (10).

4. Connecting device according to one of Claims 1 to 3,
**characterised in that** the base element (4, 20, 28, 34) comprises two connecting walls (13) and a connecting base (14) which are essentially U-shaped.

5. Connecting device according to one of Claims 1 to 4,
**characterised in that** the base element (4, 20, 28, 34) comprises at one end at least one web (15) and at the opposite end a pocket (16) of thereto complementary design.

6. Connecting device according to one of Claims 3 to 5,
**characterised in that** the throughbore (11) of the base element (4, 20, 28, 34) comprises an interior thread (19).

7. Connecting element according to one of Claims 2 to 6,
**characterised in that** the linking element (5, 25, 31, 32, 37) comprises a linking plate (21) and a thereto perpendicularly angled fixing plate (22), and the connecting plate (21) comprises at least one fixing hole (6), and the fixing plate (22) is provided with the pins (9) of the detent connection (7, 35, 36).

8. Connecting device according to Claim 4, **characterised in that** the connecting walls (13) are of rectangular design, and the width (t) of the connecting walls (13) of the base element (4, 20, 28, 34) correspond with 2 times the height (h) of the assembly rails (1, 2, 30, 33, 38) and 2 times the distance (a) of the two connecting walls (13).

## Revendications

1. Dispositif de liaison pour des rails de montage (1, 2, 30, 33, 38), avec un élément de liaison (3), pour relier les rails de montage (1, 2, 30, 33, 38), **caractérisé en ce que** l'élément de liaison (3) comporte une partie de base (4, 20, 28, 34) et au moins une partie de liaison (5, 25, 31, 32, 37) avec au moins un trou de fixation (6, 39), la partie de liaison (5, 25, 31, 32, 37) pouvant être reliée à la partie de base (4, 20, 28, 34) de manière détachable par l'intermédiaire d'une liaison encliquetée (7, 35, 36).

2. Dispositif de liaison selon la revendication 1, **caractérisé en ce que** la liaison encliquetée (7, 35, 36) comporte plusieurs évidements (8) qui peuvent être amenés en prise avec des plots (9) d'une autre pièce, et la partie de base (4, 20, 28, 34) et la partie de liaison (5, 25, 31, 32, 37) peuvent être reliées l'une à l'autre par serrage par l'intermédiaire d'une liaison vissée (10).

3. Dispositif de liaison selon la revendication 2, **caractérisé en ce que** la partie de base (5, 31, 32, 37) comporte au moins quatre évidements (8) qui sont disposés de manière symétrique autour d'un trou débouchant (11) pour la liaison vissée (10) et qui peuvent être amenés en prise avec quatre plots (9) disposés de manière symétrique autour d'un trou débouchant (12) pour la liaison vissée (10).

4. Dispositif de liaison selon une des revendications 1 à 3, **caractérisé en ce que** la partie de base (4, 20, 28, 34) comporte deux parois de liaison (13) et un fond de liaison (14), lesquels sont agencés sensiblement en forme de U.

5. Dispositif de liaison selon une des revendications 1 à 4, **caractérisé en ce que** la partie de base (4, 20, 28, 34) comporte, sur une face frontale, au moins une languette (15) et, sur la face frontale opposée, une découpe (16) de conformation complémentaire à celle-ci.

6. Dispositif de liaison selon une des revendications 3 à 5, **caractérisé en ce que** le trou débouchant (11) de la partie de base (4, 20, 28, 34) comporte un taraudage (19).

7. Dispositif de liaison selon une des revendications 2 à 6, **caractérisé en ce que** la partie de liaison (5, 25, 31, 32, 37) comporte une plaque de liaison (21) et une plaque de fixation (22) coudée perpendiculairement par rapport à celle-ci, la plaque de liaison (21) comportant au moins un trou de fixation (6) et la plaque de fixation (22) étant pourvue des plots (9) de la liaison encliquetée (7, 35, 36).

8. Dispositif de liaison selon la revendication 4, **caractérisé en ce que** les parois de liaison (13) sont de conformation rectangulaire, la largeur (t) des parois de liaison (13) de la partie de base (4, 20, 28, 34) correspondant à 2 fois la hauteur (h) des rails de montage (1, 2, 30, 33, 38) et à 2 fois l'écartement (a) des deux parois de liaison (13).
